# EUROPÄISCHE PATENTSCHRIFT

(11) **EP 1 361 036 B1**
(45) Veröffentlichungstag und Bekanntmachung des Hinweises auf die Patenterteilung: **06.05.2004**
(21) Anmeldenummer: 03010237.0
(22) Anmeldetag: 07.05.2003
(51) Int. Cl.: B29C 51/04, B29C 51/26

(54) **Formwerkzeug zum Tiefziehen von Behältern aus thermoplastischem Kunststoff, wobei in den Stempel ein Ventil integriert ist**
Apparatus for thermoforming of containers with a punch having an integrated valve
Appareil pour l'emboutissage thermoformique ayant un poinçon avec une valve integrée

(30) Priorität: 10.05.2002 DE 10220701; 10.05.2002 DE 10220700
(43) Veröffentlichungstag der Anmeldung: 12.11.2003
(73) Patentinhaber: Adolf Illig Maschinenbau GmbH & Co. KG, 74081 Heilbronn (DE)
(72) Erfinder: Trautwein, Herbert, 71737 Kirchberg (DE); Teller, Marcus, 74078 Heilbronn-Biberach (DE); Kratochwil, Klaus, 74078 Heilbronn-Biberach (DE); Scheithauer, Michael, 74842 Billigheim (DE)

(56) Entgegenhaltungen:
- EP-A- 1 103 365
- DE-U- 20 116 922
- FR-A- 2 724 868
- US-A- 5 773 540

## Beschreibung

Die Erfindung geht aus von einem Formwerkzeug nach dem Oberbegriff des Anspruches 1. Mit diesem werden aus einer erwärmten Folienbahn aus thermoplastischem Kunststoff mittels Druckluft Behälter tiefgezogen und ggf. ausgestanzt.

Aus der DE 199 56 506 A1 und der EP 0 457 664 A1 sind derartige Formwerkzeuge bekannt, bei denen jeder Vorstrecker als Kolben ausgebildet bzw. mit einem Kolben verbunden ist, der im Niederhalter gleitend und dichtend geführt ist. Die Druckluft zur Formung der Behälter wird durch die Betätigungsstange des Streckhelfers zugeführt, die als Rohr ausgebildet ist. Der Grund dieser Ausbildung liegt darin, dass Druckluft zum Formen der Behälter eingespart werden soll, indem der Innenraum des Niederhalters hinter dem Streckhelfer beim Zuleiten der Druckluft nicht mit dieser gefüllt werden muss, sondern einen niedrigeren Druck aufweisen kann. Zudem soll die Taktzahl durch diese Maßnahme durch den raschen Druckaufbau mit relativ kleinen Füllvolumen erhöht werden. Die Druckluft zum Formen der Behälter wird über ein nicht dargestelltes Hauptformluftventil zu- und abgeführt, das in bekannter Weise außerhalb des Formwerkzeuges, in der Regel an der Oberbrücke der Formstation, angeordnet ist. Die Leitungswege sind entsprechend lang und müssen bei jedem Zuführen von Druckluft gefüllt werden. Beim Entlüften müssen sie entlüftet werden. Dies bedeutet einerseits einen Luftverbrauch, andererseits eine Verzögerung insbesondere beim Druckluftaufbau, der die Taktzahl des Formwerkzeuges reduziert.

Aus der DE 201 16 922 U1 ist es bekannt, zur Beschleunigung des Druckaufbaus in den einzelnen Formnestern in der Trägerplatte der oberen Werkzeughälfte mehrere Elektromagnetventile anzuordnen, um die Formluft bis zu diesen Magnetventilen über ein nicht beschriebenes, aber zwingend erforderliches vorgeschaltetes Ventil unter Druck zuzuführen, um dann beim Zuschalten der Formluft zum Formen der Behälter außer den Formnestern selbst nur die kurzen Leitungen zwischen diesen Magnetventilen und den Formnestern füllen zu müssen. Die Formluftzufuhr erfolgt hier nicht über die Betätigungsstangen der Streckhelfer, sondern über Schlitze im unteren Bereich der Niederhalter.

Nachteilig bei dieser Bauweise ist es, dass bei mehrreihigen Werkzeugen das Befüllen von mehreren Formnestern über ein Magnetventil erfolgt. So werden bei dreireihigen Formwerkzeugen drei Formnester über ein Magnetventil be- und entlüftet. Dies bedeutet - da die Druckluft zuerst ins erste Formnest strömt, von dort dann ins zweite Formnest und dann ins dritte Formnest - einen pro Formnest zeitlich unterschiedlichen Druckaufbau mit der Folge unterschiedlicher Verfahrensbedingungen und damit unterschiedlicher Qualität der geformten Behälter je nach Behälterreihe.

Ein weiterer Nachteil liegt darin, dass die Magnetventile direkt an bzw. in der Trägerplatte des oberen Werkzeugteils sitzen, das auch die Matrize zum Ausstanzen der geformten Behälter trägt. Die unvermeidlichen Stanzschläge wirken direkt auf die Magnetventile, die anfällig sind, da in ihnen kleine Kolben elektromagnetisch verschiebbar gestaltet sind. Störungen und Beschädigung der Magnetventile treten recht häufig auf, da die Formwerkzeuge in bekannter Weise bis 40 Takte pro Minute betrieben werden. Baulich ist wenig Platz für Magnetventile mit großem Durchflussquerschnitt, sodass die Querschnitte relativ klein gewählt werden müssen, was die Belüftungszeit insbesondere bei mehrreihigen Formwerkzeugen und damit die Taktzahl negativ beeinflusst.

Eine Reduzierung des Luftverbrauchs in den Formluftleitungen ist bei dieser Ausführung nicht gegeben, da über die Magnetventile und das vorgeschaltete Formluftventil auch die Entlüftung der Formnester erfolgt. Das vorgeschaltete, nicht dargestellte Hauptformluftventil versorgt den mit Position 66 bezeichneten Strömungskanal mit Formluft bis zu den Magnetventilen Position 79. Beim Entlüften muss diese Luft im Strömungskanal 66 auch wieder entlüftet werden, bevor das Formwerkzeug öffnet, was nur über das Hauptformluftventil erfolgen kann. Folglich muss die Leitung zwischen Hauptformluftventil und den Magnetventilen bei jedem Takt neu belüftet werden. Eine Formlufteinsparung gegenüber einer Direktzufuhr der Formluft ― also vom Hauptformluftventil aus ohne Zwischenschaltung der Magnetventile - liegt damit nicht vor. Die Magnetventile haben lediglich die Aufgabe, einen rascheren Druckaufbau in den Formnestern zu bewirken, weil die Leitung zwischen Hauptformluftventil und den einzelnen Magnetventilen bereits während des Entformens der Behälter befüllt werden kann. Es sind also kurze Leitungen beim Belüften der Formnester zu füllen, das Entlüften erfolgt nicht rascher als bei der Bauweise ohne diese Magnetventile.

Der Erfindung liegt die Aufgabe zugrunde, die geschilderten Nachteile des Standes der Technik zu überwinden unter Beibehaltung des Vorteiles eines raschen Druckluftaufbaues in den Formnestern. Dabei sollte der Druckaufbau in allen Formnestern zur Erzielung einer guten Qualität der Behälter gleichzeitig erfolgen, auch bei mehrreihiger Bauweise des Formwerkzeuges, und der Druckabbau sollte beschleunigt werden. Die Störungsanfälligkeit der Bauteile zum Zu- und Abschalten der Formluft sollte reduziert und der Druckluftverbrauch verringert werden.

Gelöst ist diese Aufgabe erfindungsgemäß durch die im Kennzeichen des Hauptanspruchs angegebenen Maßnahmen.

Bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigen:
- Figur 1: einen Querschnitt durch das Formwerkzeug in geschlossener Stellung vor Einleitung des Tiefziehvorganges.
- Figur 2: denselben Querschnitt nach teilweiser mechanischer Vorstreckung der Folienbahn durch den Streckhelfer.
- Figur 3: denselben Querschnitt nach Abschluss der pneumatischen Formung und nach der Aufwärtsbewegung des Streckhelfers.
- Figur 4 bis 6: eine erste Gestaltung der Formluftzufuhr mit verschiedenen Lösungen der Ventilausführung bei Betätigung über eine Stange oder über ein Rohr.
- Figur 7: einen Querschnitt durch das Formwerkzeug in geschlossener Stellung vor Einleitung des Tiefziehvorganges bei einem anderen Prinzip der Ventilgestaltung.
- Figur 8 bis 11: eine Teilansicht des Ventils zur Steuerung der Formluftzufuhr in jedem Streckhelfer in verschiedenen Ausführungsformen und Stellungen bei Betätigung über den Formdruck.
- Figur 12 und 13: eine Gestaltung des Formluftventils als 3/2-Wegeventil.

Das Formwerkzeug besteht aus dem Oberteil 1 und dem Unterteil 2. Letzteres umfasst eine Grundplatte 3, einen Kühlblock 4 und in diesen pro Formnest eingesetzte Formeinsätze 5 einreihig wie dargestellt oder mehrreihig mit der Gestalt der herzustellenden Behälter 6. Die Formeinsätze 5 sind einteilig oder zweiteilig ausgebildet und tragen bei kombiniert formenden und stanzenden Formwerkzeugen an der oberen, der Folienbahn 7 zugewandten Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der Behälter 6 aus den Formeinsätzen 5 dient ein verschiebbarer Formboden 10.

Das Oberteil 1 setzt sich zusammen aus einer Kopfplatte 11, einer Zwischenplatte 12, der Matrize 13 und einem in jedem Formnest angeordneten Niederhalter 14. Jeder Niederhalter 14 ist federnd nachgiebig gehalten und schiebt nach dem Ausstanzen der Behälter 6 und nach dem Öffnen des Formwerkzeuges diese aus der Matrizenbohrung. Im Niederhalter 14 ist ein Streckhelfer 15 verschiebbar angeordnet in der Weise, dass zumindest im unteren, der Folienbahn 7 zugewandten Bereich, eine Abdichtung zwischen Streckhelfer 15 und Niederhalterbohrung 18 über eine Dichtung 25 gegeben ist. Abluftbohrungen 19, 20, 21 sind so angeordnet, dass der Innenraum des Niederhalters 14 gemäß einer ersten Ausführungsform ins Freie entlüftet werden kann. Die Streckhelfer 15 sind jeweils über ein Rohr 16 mit einer gemeinsamen Halteplatte 17 verbunden. Diese kann über eine als Pfeil 22 dargestellte Antriebseinrichtung verschoben werden.

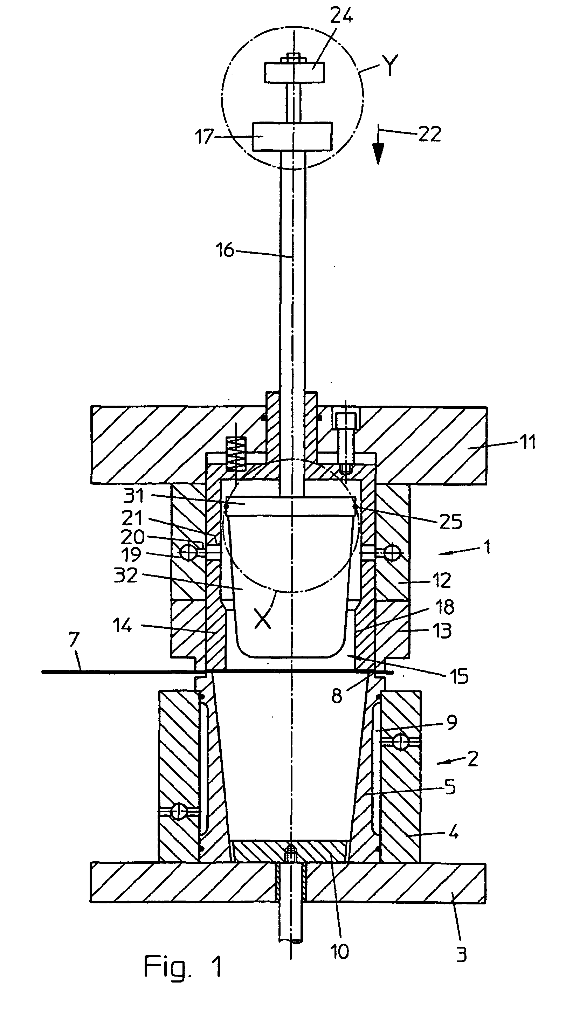

Gemäß einer ersten Gestaltungsvariante des Formwerkzeuges, näher dargestellt in den Figuren 1 bis 6, ist in jedem Rohr 16 eine zu diesem verschiebbare Stange 23 bzw. ein Rohr 44, 54 angeordnet, wobei alle Stangen 23 bzw. Rohre 44, 54 des Formwerkzeuges an einer gemeinsamen Trägerplatte 24 befestigt sind. Trägerplatte 24 und Halteplatte 17 sind über einen Antrieb 26, z. B. einen pneumatisch betätigten Kurzhubzylinder, relativ zueinander verschiebbar ausgebildet. Durch diese Verschiebung erfolgt die Betätigung des allgemein als Position 27 bezeichneten Formluftventils in jedem Streckhelfer 15 zur Zufuhr bzw. zum Absperren der Formluft zum Formnest.

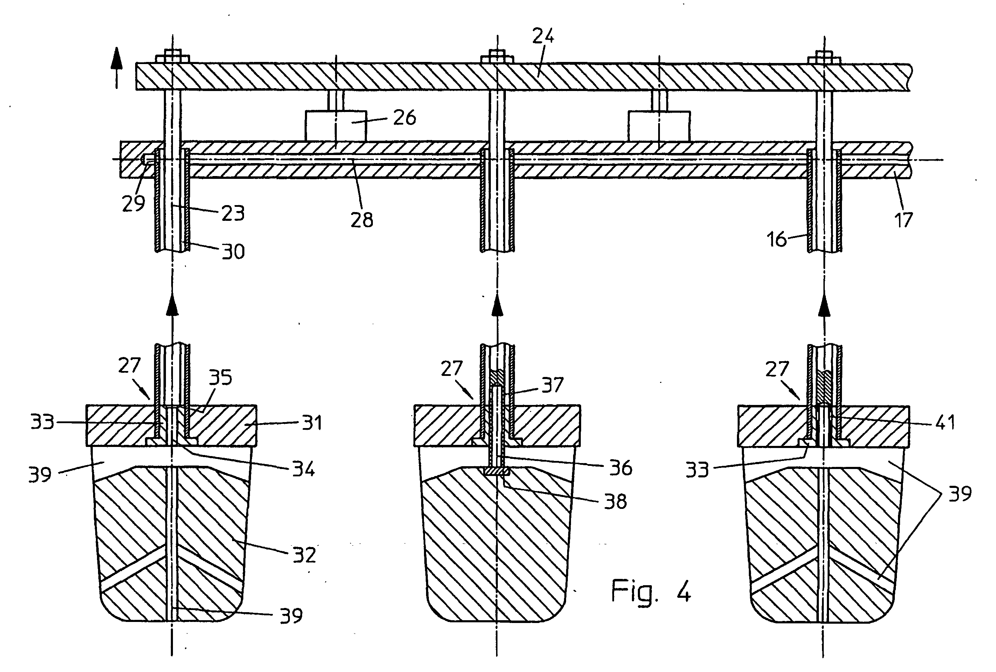

Verschiedene Varianten des Formluftventils 27 und der Luftführung sind in den Figuren 4, 5 und 6 dargestellt anhand der vergrößerten Ausschnitte X und Y in den Figuren 1 bis 3.

Gemäß einer ersten Variante - in Figur 4 dargestellt - wird die Formluft über den Zwischenraum 30 zwischen dem Rohr 16 und einer Stange 23 dem Formluftventil 27 zugeführt. Hierzu weist die Halteplatte 17 eine Längsbohrung 28 auf, die mit dem nicht dargestellten Hauptformluftventil in Verbindung steht. Jedes Rohr 16 weist in der Wandung eine oder mehrere Bohrungen 29 auf, um den Zwischenraum 30 dauernd mit vollem Formdruck zu beaufschlagen. Jeder Streckhelfer 15 besteht aus einer Konsole 31 und dem daran befestigten Vorstrecker 32. Das Rohr 16 ist mit der Konsole 31 verbunden, eine eingesetzte Buchse 33 verschließt das Rohr 16 und weist eine Axialbohrung 34 auf.

Gemäß einer ersten Ausführungsform - Figur 4 links - ist das Formluftventil 27 in der Weise gestaltet, dass die Stange 23 aus Vollmaterial besteht und über einen Dichtkegel 35 eine Abdichtung bzw. Freigabe der Formluft durch Verschließen/Öffnen der Axialbohrung 34 bewirkt, die dann über Austrittsöffnungen 39 in das Formnest geleitet wird.

Gemäß einer zweiten Ausführungsform - Figur 4 Mitte - ist die Stange 23 an der Unterseite mit einer Bohrung 36 versehen, in die Durchbrüche 37 münden und die somit in Verbindung steht mit dem Zwischenraum 30. Das untere Ende der Stange 23 bewirkt im Zusammenwirken mit einer Flachdichtung 38 am Vorstrecker 32 eine Abdichtung bzw. nach Verschiebung eine Freigabe zu den Austrittsöffnungen 39.

Gemäß einer dritten Ausführungsform - Figur 4 rechts - weist die Stange 23 ebenfalls am unteren Ende eine Bohrung 36 und Durchbrüche 41 auf. Die Durchbrüche 41 sind so angeordnet, dass sie beim Verschieben der Stange 23 zwischen einer verschlossenen Lage in der Axialbohrung 34 und einer offenen Lage - Verbindung zu den Austrittsöffnungen 39 - verschoben wird. Diese Ausführung hat den Vorteil, dass größere Toleranzen in der Axiallage der Stange 23 zum Rohr 16 sich nicht nachteilig bezüglich Leckage der Formluft am Ventil 27 auswirken.

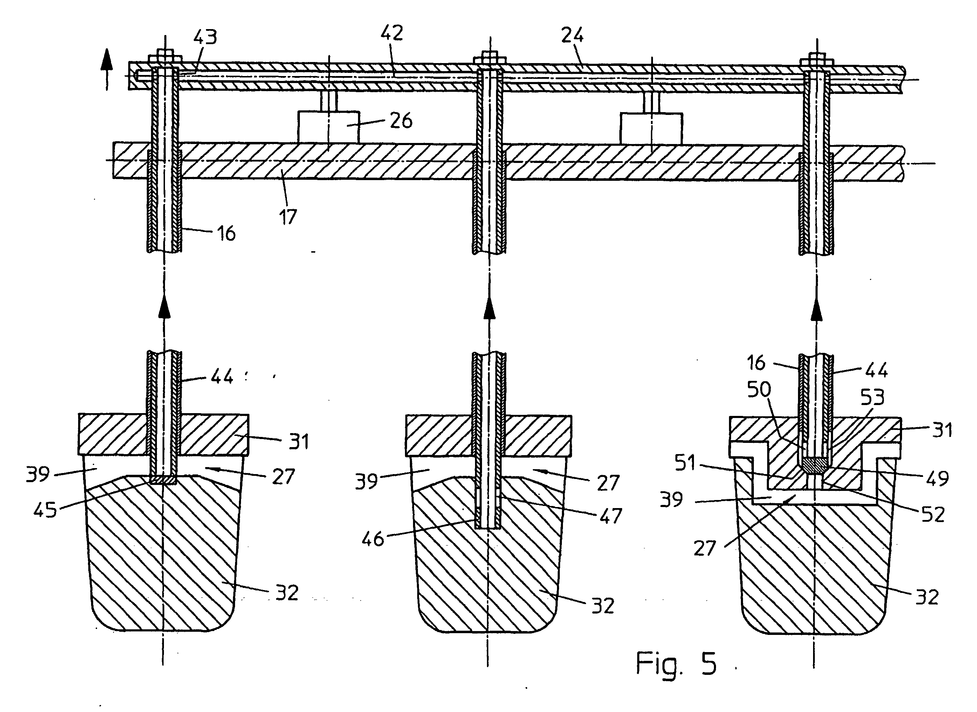

Figur 5 zeigt eine zweite Variante der Formluftzufuhr. Dabei ist anstelle der Stange 23 ein Rohr 44 vorgesehen, die Formluft wird über das nicht dargestellte Hauptformluftventil einer Bohrung 42 in der Trägerplatte 24 zugeführt und von dort aus über Querbohrungen 43 in das Innere des Rohres 44 geleitet.

Gemäß einer ersten Ausführungsform - Figur 4 links - trifft das untere Ende des Rohres 44 auf eine Dichtung 45 im Vorstrecker 32 und bildet auf diese Weise das Formluftventil 27.

Gemäß einer zweiten Ausführungsform - Figur 5 Mitte - ist das untere Ende des Rohres 44 in einer Bohrung 46 des Vorstreckers 32 geführt und mit Schlitzen 47 versehen, so dass diese Schlitze 47 zwischen einer durch die Bohrung 46 verschlossenen und einer mit den Austrittsöffnungen 39 des Streckhelfers 15 verbundenen Stellung verschoben werden können. Hierdurch wird die Formluft abgesperrt oder zugeführt, geschaltet über den Antrieb 26. Auch bei dieser Ausführungsform können größere Toleranzen der Längsverschiebung des Rohres 44 ohne Gefahr der Leckage in Kauf genommen werden.

Gemäß einer dritten Ausführungsform - Figur 5 rechts - ist das untere Ende des Rohres 44 mit einem Konus 49 verschlossen und weist in der Wandung oberhalb des Konus 49 Durchbrüche 50 auf. Der Konus 49 wirkt mit einer Dichtkante 51 in der Konsole 31 zusammen, die in eine Bohrung 52 übergeht, die bis zu den Austrittsöffnungen 39 führt. Die Durchbrüche 50 münden in einen Freiraum 53, der durch Anheben des Konus 49 in Verbindung mit der Bohrung 52 gebracht werden kann, sodass die im Rohr 44 anstehende Formluft zu den Austrittsöffnungen 39 geleitet wird.

Verfahrensmäßig findet bei den Ausführungen gemäß den Figuren 4 bis 6 folgender Ablauf statt:

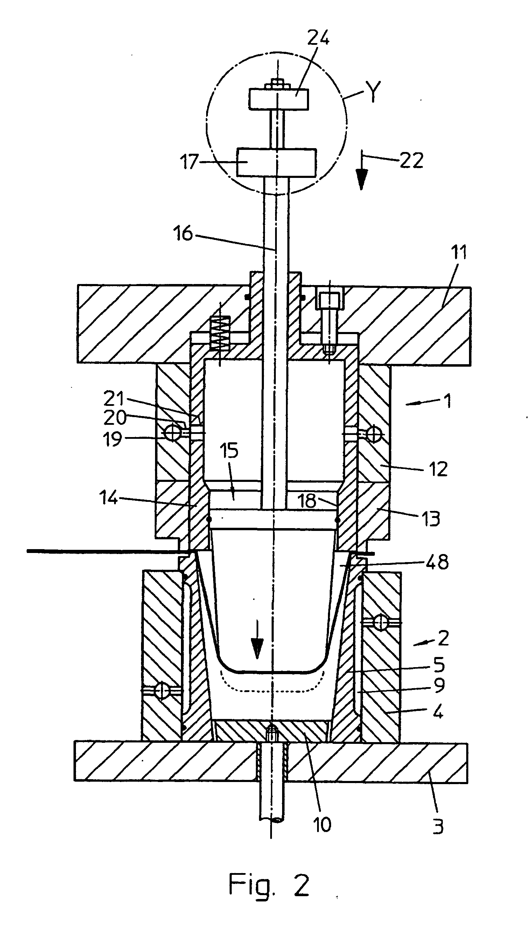

Nach dem Eintransport eines Abschnittes der erwärmten Folienbahn 7 zwischen die geöffneten Werkzeughälften 1, 2 wird das Formwerkzeug geschlossen ( Lage in Fig. 1 dargestellt). Die Streckhelfer 15 werden über die als Pfeil 22 dargestellte Antriebseinrichtung nach unten bewegt bis in die in Figur 2 dargestellte Lage, in der eine Abdichtung zwischen Streckhelfer 15 und Bohrung 18 gegeben ist. Zwischen dieser Stellung und der untersten - gestrichelt dargestellten Lage ― wird die Formluft zugeführt. Der optimale Zeitpunkt zur Erzielung einer gleichmäßigen Wandstärkenverteilung der Behälter 6 ist abhängig von vielen Faktoren, wie Behältergestalt, Folienart, Foliendicke, und wird durch Versuche ermittelt. Die Zufuhr der Druckluft erfolgt in der Weise, dass diese über das nicht dargestellte, vorgeschaltete Hauptformluftventil beim Start der Thermoformmaschine dauerhaft den Längsbohrungen 28 bzw. 42 zugeführt wird und die damit bis zum Formluftventil 27 ansteht. Nach der mechanischen Vorstreckung der Folienbahn 7 - siehe Figur 2 - wird durch Verschiebung von Stange 23 bzw. Rohr 44 über den Antrieb 26 das Ventil 27 umgeschaltet, so dass Formluft in den Raum 48 einströmt und den Behälter 6 formt. Nach dem Aufbau des Formdruckes wird das Formluftventil 27 wieder geschlossen, so dass ab einer teilweisen Aufwärtsbewegung des Streckhelfers 15 das Entlüften des Formnestes über die Bohrungen 19, 20, 21 erfolgen kann. Dadurch, dass die Zuleitung der Formluft bis zum Formluftventil 27 unter Druck bleibt, wird diese Zuleitung nicht entlüftet, so dass ein geringer Luftverbrauch vorliegt. Zudem ist der Vorteil gegeben, dass ein rascher Druckaufbau im Formnest erfolgt, da die Luft schon unter vollem Druck am Streckhelfer 15 ansteht.

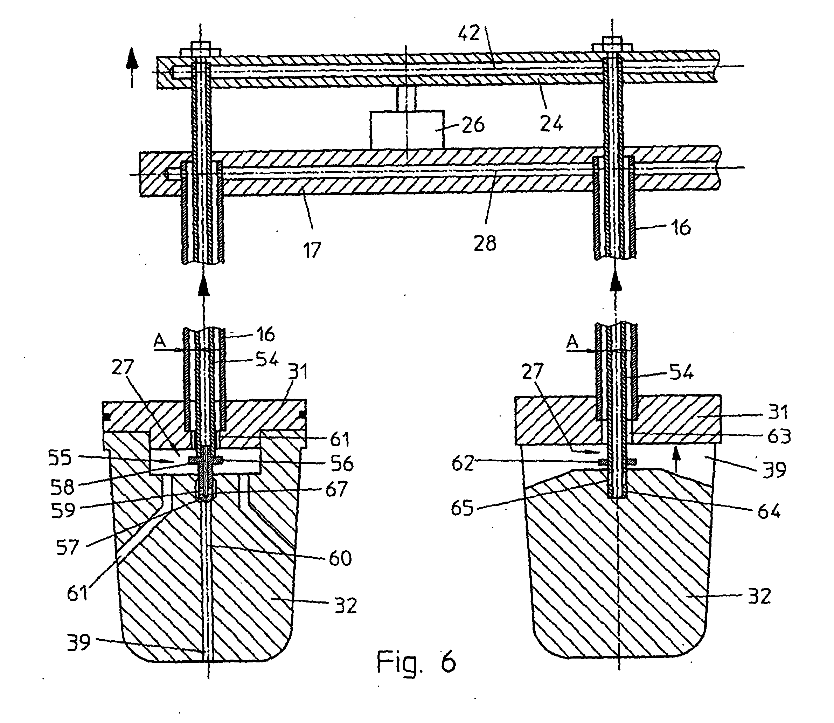

Bei den Lösungen gemäß den Figuren 1 bis 5 wird davon ausgegangen, dass die Formluft über die Abluftbohrungen 19, 20, 21 automatisch nach einem bestimmten Aufwärtshub des Streckhelfers 15 entweicht. In bestimmten Fällen ist es vorteilhaft, eine andere Ableitung der Formluft zu wählen, die dadurch erreicht wird, dass innerhalb des Rohres 16 ein zweites Rohr 54 im Abstand A zu der inneren Wandung des Rohres 16 angeordnet ist. Diese Ausführung ist in Figur 6 in zwei Ausführungsformen des dann verwendeten Formluftventils 27 dargestellt.

Gemäß einer ersten Ausführungsform - Figur 6 links - ist das untere Ende des Rohres 54 mit einem Steuerkolben 55 versehen, der einen Teller 56 und einen Dichtkonus 57 aufweist. Eine Axialbohrung 58 führt zu Durchbrüchen 59 in der dadurch gebildeten Wand. Diese führen zu einem Freiraum 67 im Vorstrecker 32, der außerdem eine zentrale Bohrung 60 aufweist, die durch den Dichtkonus 57 verschlossen bzw. geöffnet werden kann und die zu einer Austrittsöffnung 39 führt. In der Konsole 31 sitzt das Rohr 16, das im Bereich des Zwischenraumes A Durchbrüche 61 bis zur Unterseite der Konsole 31 aufweist, die durch den Teller 56 in dessen angehobener Stellung abgedeckt werden. Die Formluft wird bei dieser Ausführung durch das Rohr 54 und durch Anheben des Steuerkolbens 55 zugeführt, wodurch gleichzeitig eine Absperrung der Formluftableitung über die Durchbrüche 61 unterbunden wird. Nach dem Formen der Behälter 6 wird der Steuerkolben 55 abgesenkt, dichtet die Formluftzufuhr ab und öffnet die Entlüftung über die Entlüftungsbohrungen 68, die Durchbrüche 61 und die Längsbohrung 28.

Gemäß einer zweiten Ausführungsform - Figur 6 rechts - sitzt am Rohr 54 ein Teller 62, der in angehobener Stellung einen oder mehrere Durchbrüche 63 in der Konsole 31 verschließt, die im Bereich des Abstandes A angeordnet sind. Das Ende des Rohres 54 ist in einer Bohrung 64 im Vorstrecker 32 geführt und weist in der Wand Durchbrüche 65 auf, die bei abgesenkter Rohr 54 in der Bohrung 64 dichtend sitzen, bei angehobener Stellung auf die Austrittsöffnungen 39 treffen. Auch bei dieser Ausführung wird die Formluft über das Rohr 54 zugeführt und über den Zwischenraum zwischen den Rohren 16, 54 über die Längsbohrung 28 abgeleitet. Selbstverständlich ist eine umgekehrte Formluftführung ebenso möglich.

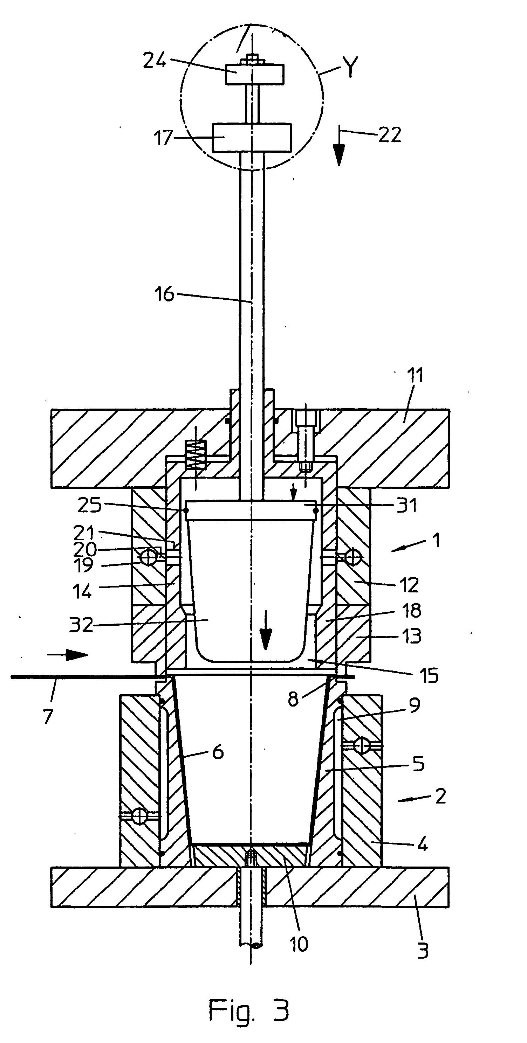

Nach dem Auskühlen der Behälter 6 werden diese bei kombiniert formenden und stanzenden Formwerkzeugen ausgestanzt (Lage in Figur 3 dargestellt) und bei wieder geöffnetem Formwerkzeug ausgeworfen. Bei einem reinen Formwerkzeug bleiben sie mit der Folienbahn 7 verbunden und werden Nachfolgeeinrichtungen zugeführt.

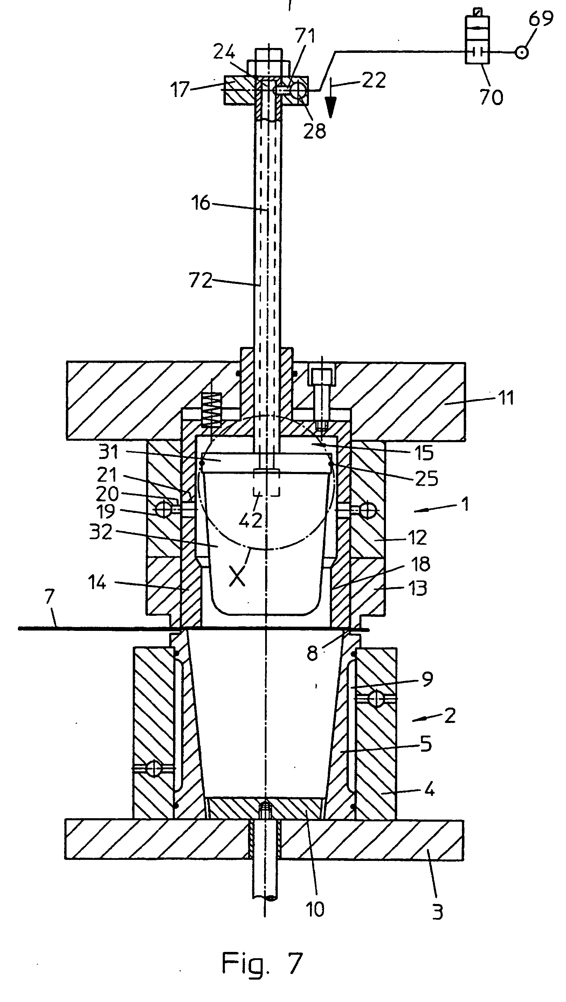

Gemäß einer 2. Gestaltung des Formwerkzeuges ist das Formluftventil 27 als druckbetätigbares Ventil ausgebildet, dargestellt in den Figuren 7 bis 11. Die Streckhelfer 15 sind ebenfalls über ein Rohr 16 mit der gemeinsamen Halteplatte 17 verbunden. Diese kann über eine als Pfeil 22 dargestellte Antriebseinrichtung verschoben werden. Sie weist eine mit einer Druckluftquelle 69 über ein Hauptventil 70 in Verbindung stehende Längsbohrung 28 auf, die über eine Querbohrung 71 mit der Axialbohrung 72 im Rohr 16 in Verbindung steht.

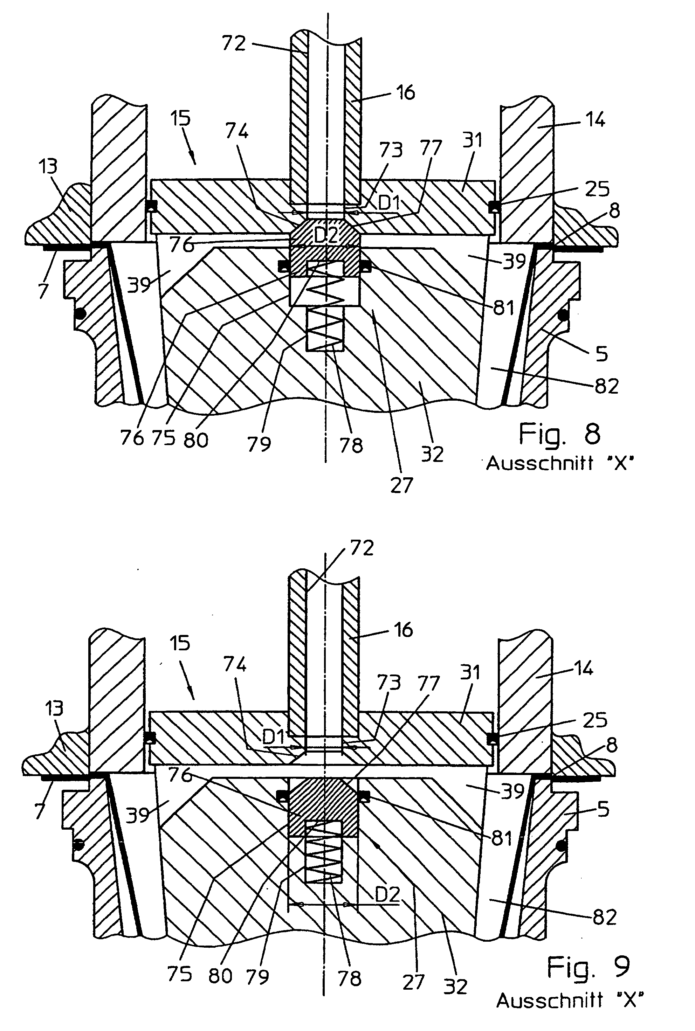

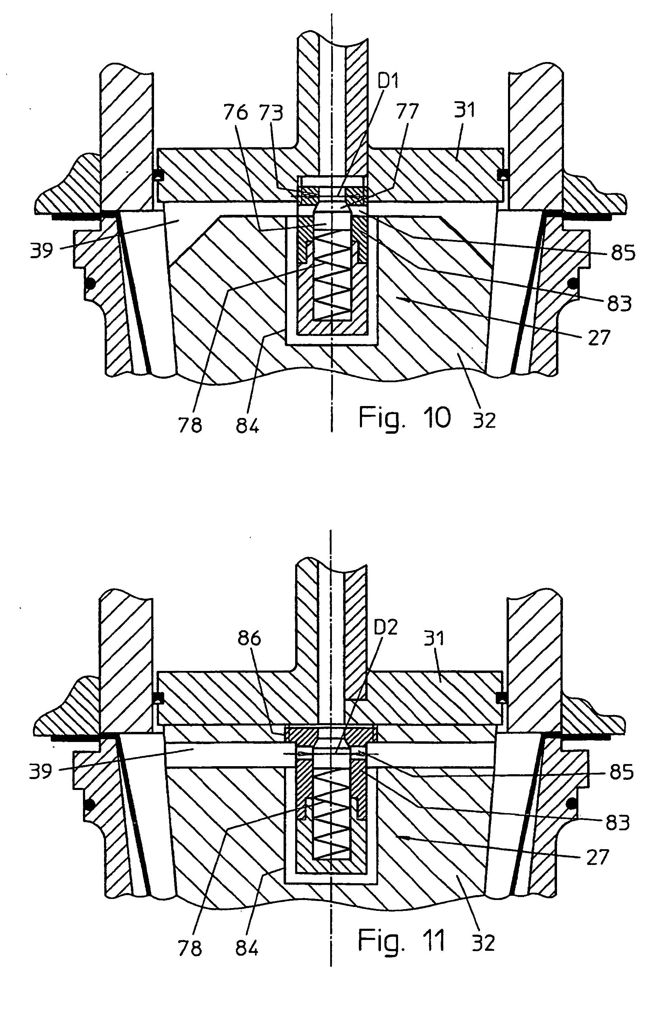

In jedem Streckhelfer 15 ist ein druckbetätigbares Formluftventil 27 angeordnet und näher in den Figuren 8 bis 11 (Detail "X" in Figur 7) dargestellt. Dazu besteht der Streckhelfer 15 aus einer Konsole 31 und dem Vorstrecker 32, die miteinander verbunden sind. In der Konsole 31 ist das Rohr 16 befestigt (Fig. 8, 9) oder Rohr 16 und Konsole 31 sind aus einem Teil gefertigt, wie in den Figuren 10 und 11 links dargestellt.

Gemäß der Ausführungsform in den Figuren 8 und 9 setzt sich die Axialbohrung 72 in dem Rohr 16 in der Konsole 31 fort als Bohrung 73 mit einem Durchmesser D1, die in den Konus 74 übergeht. Im Streckstempel 32 sitzt verschiebbar in einer Bohrung 75 ein Sperrkolben 76 mit dem Durchmesser D2, der mit einem Konus 77 auf dem Konus 74 in der Konsole 31 in geschlossener Stellung dichtend aufsitzt. Zum Andrücken dient die Feder 78, die in der Bohrung 79 sitzt und gegen den Boden 80 des Sperrkolbens 76 drückt. Eine Dichtung 81 verhindert, dass Formluft in die Bohrungen 75, 79 gelangt und ist so gestaltet, dass aus dieser bei Drucklosigkeit im Formnest Druckluft entweicht, sollte sich dort aus Gründen der Undichtigkeit ein Überdruck aufgebaut haben. Mit einem Lippenring als Dichtung 81 ist diese Funktionalität gegeben.

In der Verbindungsfläche zwischen Konsole 31 und Vorstrecker 32 sind Austrittsöffnungen 39 in Form von Schlitzen oder Durchbrüche beliebiger Gestalt eingearbeitet, so dass bei abgehobenem Sperrkolben 76 eine Verbindung zwischen Axialbohrung 72 und Innenraum 82 besteht.

Gemäß der Ausführungsform nach Figur 10 besteht das Formluftventil 27 aus einer aus Montagegründen zweiteiligen Hülse 83, in der die Feder 78 und der verschiebbare Sperrkolben 76 angeordnet sind. Die Hülse 83 ist in die Konsole 31 eingeschraubt, sodass ein Tausch der Vorstrecker 32 ohne Demontage des Formluftventils 27 erfolgen kann. Im Vorstrecker 32 ist eine entsprechende Freibohrung 84 eingearbeitet. In der Wandung der Hülse 83 verlaufen Bohrungen 85, die auf die Austrittsöffnungen 39 im Vorstrecker 32 treffen. Die Bohrung 73 mit dem Durchmesser D1 befindet sich im oberen Abschluss der Hülse 83, gegen sie drückt der Konus 77 am Sperrkolben 76.

Nach der in Figur 11 dargestellten Ausführung wird vorgeschlagen, die Hülse 83 im Vorstrecker 32 zu befestigen, z.B. durch Einschrauben in eine Bohrung 86. Wieder treffen die Bohrungen 85 in der Wand der Hülse 83 auf die Austrittsöffnungen 39 oder entsprechende Durchbrüche im Vorstrecker 32. Auch bei dieser Ausführung ist ein Tausch des Vorstreckers 32 ohne Demontage des Formluftventils 27 möglich und dieses verbleibt im Vorstrecker 32.

Verfahrensmäßig findet folgender Ablauf bei einem Formwerkzeug gemäß den Figuren 7 bis 11 statt:
Nach dem Eintransport eines Abschnittes der erwärmten Folienbahn 7 zwischen die geöffneten Werkzeughälften 1, 2 wird das Formwerkzeug geschlossen. ( Lage in Fig. 7 dargestellt). Der Streckhelfer 15 wird über die als Pfeil 22 dargestellte Antriebseinrichtung nach unten bewegt analog der in Figur 2 dargestellten Lage, in der eine Abdichtung zwischen Streckhelfer 15 und Bohrung 18 gegeben ist. Zwischen dieser Stellung und der untersten - gestrichelt dargestellten Lage - wird die Formluft zugeführt. Die Zufuhr der Druckluft erfolgt in der Weise, dass diese über das vorgeschaltete Hauptventil 70, das zwischen einer Sperrstellung und einer Durchgangsstellung geschaltet werden kann, in die Axialbohrung 72 geleitet wird. Wird dort beispielsweise ein Formdruck von 6 bar erreicht, öffnet der Sperrkolben 76 gegen die Feder 78, in dem Durchmesser D 1 und Federkraft der Feder 78 entsprechend aufeinander abgestimmt sind, um bei diesem Druck von beispielsweise 6 bar zu öffnen.

Die Formluft strömt über die Schlitze 39 in den Innenraum 82 und formt den Behälter 6, während eine weitere Abwärtsbewegung des Streckhelfers 15 bis in unterste Lage erfolgt.

Es erfolgt die Aufwärtsbewegung des Streckhelfers 15 analog der in Figur 3 dargestellten Lage, wobei, wenn die Dichtung 25 die Bohrung 18 verlässt und in den erweiterten Bereich eintritt, die Formluft automatisch über die Bohrungen 19, 20, 21 entweicht und der Formdruck abgebaut wird.

Der Sperrkolben 76 wird bei einem Druck von beispielsweise 4 bar über die Feder 78 wieder gegen den Konus 74 gedrückt und dichtet ab. Da das Hauptventil 70 zuvor in Sperrstellung gebracht wurde, verbleibt in den Axialbohrungen 24 ein Restdruck von 4 bar, so dass beim nächsten Takt nur der Differenzdruck bis 6 bar aufgebaut werden muss. Dies geschieht rascher als ein Druckaufbau von 0 bar auf 6 bar und spart zwei Drittel an Druckluft ein. Durch die Gestaltung des Sperrkolbens 76 mit einem Durchmesser D2, der größer ist als der Durchmesser D1 der Bohrung 82, ergibt sich der Effekt, dass im Sperrzustand - Innenraum 82 entlüftet - eine Kraft als Produkt aus der Fläche mit D1 und dem Druck von 4 bar im Ruhezustand auf den Sperrkolben 76 drückt. Wenn dann der Druck in der Axialbohrung 24 erhöht wird, hebt der Sperrkolben 76 ab und jetzt wirkt auf ihn eine Kraft als Produkt aus der Fläche mit D 2 und dem höheren Formdruck. Die Kraft auf den Sperrkolben 76 wird also sofort nach dem Öffnen schlagartig erhöht, wodurch dieser seinen vollen Öffnungshub ausführt und die Formluft rasch in den relativ kleinen - weil nach oben durch die Dichtung 25 abgedichteten Innenraum 82 - einströmt. Es liegt also insgesamt ein sehr rascher Druckaufbau durch einen großen Einlassquerschnitt und einen geringen Druckluftbedarf vor.

Nach dem Auskühlen der Behälter 6 werden diese bei kombiniert formenden und stanzenden Formwerkzeugen ausgestanzt (Lage analog Figur 3) und bei wieder geöffnetem Formwerkzeug ausgeworfen. Bei einem reinen Formwerkzeug bleiben sie mit der Folienbahn 7 verbunden und werden Nachfolgeeinrichtungen zugeführt.

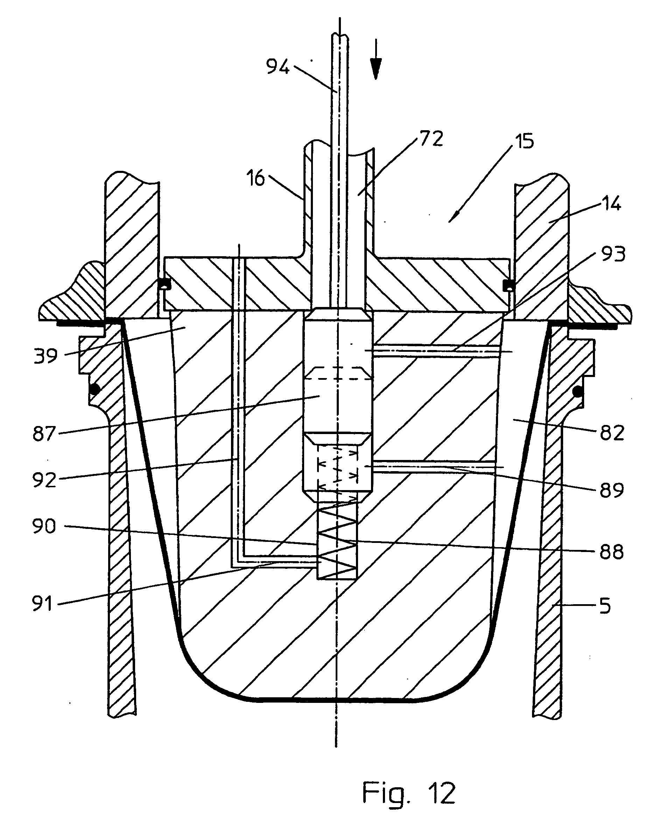

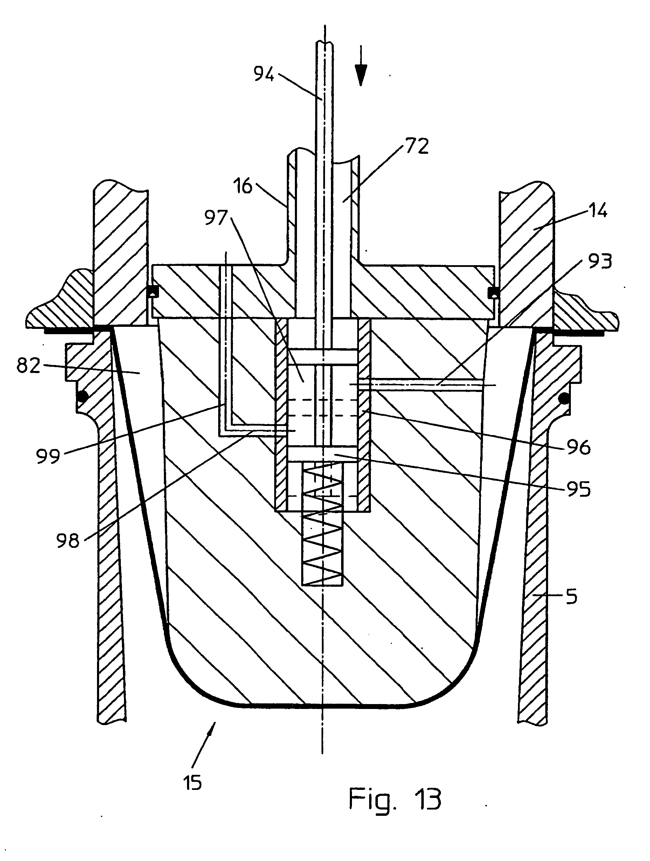

Die Figuren 12 und 13 zeigen eine Gestaltung eines Formluftventils 27, das als 3/2-Wegeventil ausgebildet ist. In unbetätigter Stellung (in Volllinien dargestellt) ist die Formluftzufuhr über die Axialbohrung 72 im Rohr 16 abgesperrt.
In der Ausführung gemäß Figur 12 erfolgt dies durch den über die Feder 88 an die Austrittsöffnung der Axialbohrung 72 gedrückten Kolben 87. In dieser Stellung steht der Innenraum 82 des Formnestes über die Bohrungen 89 - 92 mit der Rückseite des Streckhelfers 15 in Verbindung, sodass dieser Raum über die weiteren Bohrungen 19, 20, 21 (siehe Figuren 1 bis 3) entlüftet ist. Durch Verschiebung des Kolbens 87 - entweder durch Druckerhöhung der über die Axialbohrung 72 zugeführten Formluft (Figur 12) oder durch Betätigung über eine im Rohr 16 geführte Stange 94 (Figur 13) - wird die Formluft über die durch die Verschiebung des Kolbens 87 frei werdende Querbohrung 93 in den Innenraum 82 geleitet. Gleichzeitig wird die Entlüftung über die Bohrungen 89 - 92 durch den Kolben 87 unterbrochen, sodass sich der Formdruck aufbaut. Nach Ende des Formvorganges erfolgt die Zurückbewegung des Kolbens 87 entweder durch teilweisen Druckabbau der zugeführten Formluft oder über die Rückbewegung der Stange 94, sodass die Formluftzufuhr abgesperrt und der Innenraum des Formnestes über die Bohrungen 89 - 92 entlüftet wird.
Figur 13 zeigt die Verwendung eines Kolbens 95, wie er in der Ventiltechnik verwendet wird. Er läuft in einer präzise gefertigten Hülse 96 und über die Freisparung 97 im Kolben 95 besteht in unbetätigter Stellung eine Verbindung zwischen der Querbohrung 93 und über Bohrungen 98, 99 mit der Rückseite des Streckhelfers 15. Wird der Kolben 95 verschoben - über Erhöhung des Formdruckes oder Betätigung der Stange 94 - (Lage Figur 13 strichpunktiert dargestellt) so wird die Formluftzufuhr zur Querbohrung 93 herbeigeführt und die Entlüftung abgesperrt.

Die Lösungen nach den Figuren 12 und 13 bieten entscheidende Vorteile dadurch, dass vor der Zurückbewegung der Streckhelfer 15 ein Druckausgleich zwischen Vorderseite und Rückseite herbeigeführt wird, sodass eine geringe Antriebsleistung für die Rückwärtsfahrt erforderlich ist. Eine Betätigung aller Formluftventile 27 des Formwerkzeuges über die miteinander verbundenen Stangen 94 bringt zudem eine hohe Konstanz an gleichzeitig ablaufenden Druckverhältnissen für den Formprozess in den einzelnen Formnestern insbesondere bei mehrreihigen Formwerkzeugen.

## Patentansprüche

1. Formwerkzeug zum Tiefziehen von Behältern (6) aus einer erwärmten Folienbahn (7) aus thermoplastischem Kunststoff, bestehend aus Oberteil (1) und Unterteil (2), wobei das Unterteil (2) die Formeinsätze (5) trägt und das Oberteil (1) pro Formnest einen Niederhalter (14) und einen darin angeordneten, über ein Rohr (16) verschiebbaren Streckhelfer (15), wobei über das Rohr (16) die Zuleitung der Formluft erfolgt, **gekennzeichnet durch** ein an der Verbindungsstelle Rohr (16) - Streckhelfer (15) angeordnetes schaltbares Ventil (27) zum Steuern der Formluftzufuhr vom Inneren des Rohres (16) zu Austrittsöffnungen (39) im Streckhelfer (15).

2. Formwerkzeug nach Anspruch 1, **gekennzeichnet durch** eine im Rohr (16) angeordnete und zu diesem axial verschiebbaren Stange (23) oder ein in diesem angeordnetes und zu diesem axial verschiebbares Rohr (44, 54), **durch** deren Verschiebung eine Zuleitung bzw. Absperrung der Formluft über das Ventil (27) erfolgt.

3. Formwerkzeug nach Anspruch 2, bei dem im Rohr (16) eine verschiebbare Stange (23) angeordnet ist, **dadurch gekennzeichnet, dass** die Formluftzufuhr über eine Längsbohrung (28) in der Halteplatte (17) für die Rohre (16) in den Zwischenraum (30) zwischen Rohr (16) und Stange (23) erfolgt und das Ende der Stange (23) im Zusammenwirken mit einer Axialbohrung (34) in der Konsole (31) des Streckhelfers (15) das Ventil (27) bildet.

4. Formwerkzeug nach Anspruch 2, bei dem im Rohr (16) eine verschiebbare Stange (23) angeordnet ist, **dadurch gekennzeichnet, dass** die Formluftzufuhr über eine Längsbohrung (28) in der Halteplatte (17) für die Rohre (16) in den Zwischenraum (30) zwischen Stange (23) und Rohr (16) erfolgt und das Ende der Stange (23) eine Axialbohrung (36), in die mindestens ein Durchbruch (37) mündet, aufweist und der Durchbruch (37) so angeordnet ist, dass durch die Verschiebung der Stange (23) eine Freigabe oder Sperrung der Formluft vom Zwischenraum (30) über die Axialbohrung (36) zu den Austrittsöffnungen (23) erfolgt.

5. Formwerkzeug nach Anspruch 4, **dadurch gekennzeichnet, dass** das untere Ende der Axialbohrung (36) in der Stange (23) in Schließstellung durch eine Dichtung (38) im Vorstrecker (32) abgedichtet ist.

6. Formwerkzeug nach Anspruch 4, **dadurch gekennzeichnet, dass** der Durchbruch (37) so angeordnet ist, dass er in Schließstellung innerhalb der Axialbohrung (34) liegt und in der Öffnungsstellung mit dem Zwischenraum (30) in Verbindung steht.

7. Formwerkzeug nach Anspruch 2, bei dem im Rohr (16) ein verschiebbares Rohr (44) angeordnet ist, **dadurch gekennzeichnet, dass** die Formluftzuführung über eine Längsbohrung (42) in der Trägerplatte (24) ins Innere des Rohres (44) erfolgt und das untere Ende des Rohres (44) im Zusammenwirken mit einer Dichtung (45) im Vorstrecker (32) des Streckhelfers (15) das Ventil (27) bildet.

8. Formwerkzeug nach Anspruch 2, bei dem im Rohr (16) ein verschiebbares Rohr (44) angeordnet ist, **dadurch gekennzeichnet, dass** die Formluftzuführung über eine Längsbohrung (42) in der Trägerplatte (24) ins Innere des Rohres (44) erfolgt und das untere Ende des Rohres (44) in einer Bohrung (46) im Vorstrecker (32) geführt ist und Durchbrüche (47) aufweist, die in Öffnungsstellung des Ventils (27) in Deckung stehen mit den Austrittsöffnungen (39) im Streckhelfer (15) und in Schließstellung in der Bohrung (46) sitzen.

9. Formwerkzeug nach Anspruch 2, bei dem im Rohr (16) ein verschiebbares Rohr (44) angeordnet ist, **dadurch gekennzeichnet, dass** die Formluftzuführung über eine Längsbohrung (42) in der Trägerplatte (24) ins Innere des Rohres (44) erfolgt und das untere Ende des Rohres (44) durch einen Konus (49) verschlossen ist, der mit einer Dichtkante (51) in der Konsole (31) zusammenwirkt und Durchbrüche (50) in der Wandung aufweist, die in einen Freiraum (53) münden, der durch Verschiebung des Konus (49) in Verbindung mit der Austrittsöffnung (39) gebracht wird.

10. Formwerkzeug nach Anspruch 2, bei dem im Rohr (16) im Abstand (A) ein axial verschiebbares Rohr (54) angeordnet ist, **dadurch gekennzeichnet, dass** die Formluft durch das Rohr (54) zum Ventil (27) geführt und über den Raum zwischen den beiden Rohren (16, 54) abgeführt wird oder umgekehrt.

11. Formwerkzeug nach Anspruch 10, **dadurch gekennzeichnet, dass** das Ventil (27) durch einen am unteren Ende des Rohres (54) angeordneten Steuerkolben (55) gebildet wird, der einen Teller (56), der im Bereich des Abstandes (A) verlaufende Durchbrüche (61) in der Konsole (31) abdichtet bzw. öffnet, sowie einen Dichtkonus (57) zum Öffnen bzw. Schließen einer zentralen Bohrung (60), die zu einer Austrittsöffnung (39) im Vorstrecker (32) führt, aufweist.

12. Formwerkzeug nach Anspruch 10, **dadurch gekennzeichnet, dass** das Ventil (27) durch einen am unteren Ende des Rohres (54) angeordneten Teller (62), der im Bereich des Abstandes (A) verlaufende Durchbrüche (63) in der Konsole (31) abdichtet bzw. öffnet, und durch eine Bohrung (64) im Vorstrecker (32), in der das untere Ende des Rohres (54) sitzt, gebildet wird, wobei in der Wand des Rohres (54) Durchbrüche (65) so angeordnet sind, dass sie durch die Axialbewegung des Rohres (54) zwischen einer durch die Bohrung (64) verschlossenen Stellung und einer die Austrittsöffnung (39) überdeckenden Stellung bewegt werden.

13. Formwerkzeug nach Anspruch 1, **dadurch gekennzeichnet, dass** das Formluftventil (27) druckbetätigbar ausgebildet ist.

14. Formwerkzeug nach Anspruch 13, **dadurch gekennzeichnet, dass** das Formluftventil (27) aus einem über eine Feder (78) nachgiebig gehaltenen Sperrkolben (76) besteht, der gegen die Bohrung (79) zum Zuleiten der Formluft gedrückt wird und der beim Zuleiten der Formluft gegen die Federkraft verschoben wird.

15. Formwerkzeug nach Anspruch 14, **dadurch gekennzeichnet, dass** der Durchmesser (D2) des Sperrkolbens (76) größer ist als der Durchmesser (D1) der Bohrung (79) zum Zuleiten der Formluft in der Konsole (31) des Streckhelfers (15).

16. Formwerkzeug nach Anspruch 14, **dadurch gekennzeichnet, dass** die Anlageflächen zwischen Sperrkolben (76) und Konsole (31) als Konus (74, 77) ausgebildet sind.

17. Formwerkzeug nach einem der Ansprüche 14 bis 16, **dadurch gekennzeichnet, dass** die Kraft der Feder (78) und der Durchmesser (D1) der Bohrung (79) zum Zuführen der Formluft und der Durchmesser (D2) des Sperrkolbens (76) so aufeinander abgestimmt sind, dass das Formluftventil (27) bei einem Formdruck von 6 bar in der Axialbohrung (24) des Rohres (16) öffnet und bei einem Restdruck zwischen 2 und 5 bar im Formnest wieder schließt.

18. Formwerkzeug nach einem der Ansprüche 14 bis 17, **dadurch gekennzeichnet, dass** das Formluftventil (27) durch eine Hülse (83) gebildet wird, in derem Inneren die Feder (78) und der Sperrkolben (76) angeordnet sind.

19. Formwerkzeug nach Anspruch 18, **dadurch gekennzeichnet, dass** die Hülse (83) an der den Streckhelfer (15) bildenden Konsole (31) befestigt ist.

20. Formwerkzeug nach Anspruch 18, **dadurch gekennzeichnet, dass** die Hülse (83) im den Streckhelfer (15) bildenden Vorstrecker (32) befestigt ist.

21. Formwerkzeug nach Anspruch 2 oder 13, **dadurch gekennzeichnet, dass** das Formluftventil (27) als 3/2-Wegeventil ausgebildet ist und in unbetätigter Stellung eine Verbindung zwischen Innenraum (82) und dem Raum hinter dem Streckhelfer (15) über Bohrungen (89-92 bzw. 93, 98, 99) herstellt und eine Umschaltung des Formluftventils (27) diese Verbindung unterbricht und die Formluft über eine Bohrung (93) in den Innenraum (82) leitet.

## Claims

1. Moulding tool for deep-draw moulding of containers (6) from a heated film strip (7) of thermoplastic plastics material, consisting of an upper part (1) and lower part (2), wherein the lower part (2) carries the mould inserts (5) and the upper part (1) carries a respective holding-down device (14) for each mould nest and a stretching aid (15), which is arranged in the holding-down device, and displaceable by way of a tube (16), wherein the feed of mould air is carried out by way of the tube (16), **characterised by** a switchable valve (27), which is arranged at the connecting point of tube (16) and stretching aid (15), for controlling the mould air feed from the interior of the tube (16) to outlet openings (39) in the stretching aid (15).

2. Mould tool according to claim 1, **characterised by** a rod (23), which is arranged in the tube (16) and axially displaceable relative thereto, or a tube (44, 54) arranged in and axially displaceable relative to this, through the displacement of which a feeding or blocking of the mould air is effected by way of the valve (27).

3. Mould tool according to claim 2, in which a displaceable rod (23) is arranged in the tube (16), **characterised in that** the mould air feed into the intermediate space (30) between tube (16) and rod (23) is effected by way of a longitudinal bore (28) in the mounting plate (17) for the tube (16) and the end of the rod (23) in co-operation with an axial bore (34) in the bracket (31) of the stretching aid (15) forms the valve (27).

4. Mould tool according to claim 2, in which a displaceable rod (23) is arranged in the tube (16), **characterised in that** the mould air feed into the intermediate space (30) between rod (23) and tube (16) is effected by way of a longitudinal bore (28) in the mounting plate (17) for the tube (16) and the end of the rod (23) has an axial bore (36) in which at least one passage (37) opens and the passage (37) is so arranged that a freeing or blocking of the mould air from the intermediate space (30) to the outlet openings (23) by way of the axial bore (36) is effected by the displacement of the rod (23).

5. Mould tool according to claim 4, **characterised in that** the lower end of the axial bore (36) is sealed off in the rod (23) in closed setting by a seal (38) in the pre-stretching device (32).

6. Mould tool according to claim 4, **characterised in that** the passage (37) is so arranged that in the closed setting it lies within the axial bore (34) and in the opened setting is disposed in connection with the intermediate space (30).

7. Mould tool according to claim 2, in which a displaceable tube (44) is arranged in the tube (16), **characterised in that** the mould air feed into the interior of the tube (44) is effected by way of a longitudinal bore (42) in the support plate (24) and the lower end of the tube (44) in co-operation with a seal (45) in the pre-stretching device (32) of the stretching aid (15) forms the valve (27).

8. Mould tool according to claim 2, in which a displaceable tube (44) is arranged in the tube (16), **characterised in that** the mould air feed into the interior of the tube (44) is effected by way of a longitudinal bore (42) in the support plate (24) and the lower end of the tube (44) is guided in a bore (46) in the pre-stretching device (32) and has passages (47) which in open setting of the valve (27) are disposed in congruency with the outlet openings (39) in the stretching aid (15) and in closed setting are seated in the bore (46).

9. Mould tool according to claim 2, in which a displaceable tube (44) is arranged in the tube (16), **characterised in that** the mould air feed into the interior of the tube (44) is effected by way of a longitudinal bore (42) in the support plate (24) and the lower end of the tube (44) is closed by a cone (49), which co-operates with a sealing edge (51) in the bracket (31) and has passages (50) in the wall, which open into a free space (53) which is brought by displacement of the cone (49) into connection with the outlet opening (39).

10. Mould tool according to claim 2, in which an axially displaceable tube (54) is arranged in the tube (16) at a spacing (A), **characterised in that** the mould air is conducted by the tube (54) to the valve (27) and is discharged or returned by way of the space between the two tubes (16, 54).

11. Mould tool according to claim 10, **characterised in that** the valve (27) is formed by a control piston (55), which is arranged at the lower end of the tube (54) and which comprises a plate (56), which seals or opens passages (61), which extend in the region of the spacing (A), in the bracket (31), as well as a sealing cone (57) for opening or closing a central bore (60), which leads to an outlet opening (39) in the pre-stretching device (32).

12. Mould tool according to claim 10, **characterised in that** the valve (27) is formed by a plate (62), which is arranged at the lower end of the tube (54) and which seals or opens passages (63), which extend in the region of the spacing (A), in the bracket (31), and by a bore (64) in the pre-stretching device (32), in which the lower end of the tube (54) is seated, wherein passages (65) are so arranged in the wall of the tube (54) that they are moved between a setting closed by the bore (64) and a setting covering the outlet opening (39) by the axial movement of the tube (54).

13. Mould tool according to claim 1, **characterised in that** the mould air valve (27) is constructed to be pressure-actuable.

14. Mould tool according to claim 13, **characterised in that** the mould air valve (27) consists of a blocking piston (76), which is mounted by way of a spring (78) to be yielding and is pressed against the bore (79) for conducting the mould air and which is displaced against the spring force when the mould air is conducted.

15. Mould tool according to claim 14, **characterised in that** the diameter (D2) of the blocking piston (76) is greater than the diameter (D1) of the bore (79) for conducting the mould air in the bracket (31) of the stretching aid (15).

16. Mould tool according to claim 14, **characterised in that** the support surfaces between blocking piston (76) and bracket (31) are constructed as a cone (74, 77).

17. Mould tool according to one of claims 14 to 16, **characterised in that** the force of the spring (78) and the diameter (D1) of the bore (79) for the feed of the mould air and the diameter (D2) of the blocking piston (76) are so matched to one another that the mould air valve (27) in the case of a mould pressure of 6 bars opens into the axial bore (24) of the tube (16) and in the case of a residual pressure between 2 and 5 bars opens back into the mould nest.

18. Mould tool according to one of claims 14 to 17, **characterised in that** the mould air valve (27) is formed by a sleeve (83), in the interior of which the spring (78) and the blocking piston (76) are arranged.

19. Mould tool according to claim 18, **characterised in that** the sleeve (83) is fastened to the bracket (31) forming the stretching aid (15).

20. Mould tool according to claim 18, **characterised in that** the sleeve (83) is fastened in the pre-stretching device (32) forming the stretching aid (15).

21. Mould tool according to claim 2 or 13, **characterised in that** the mould air valve (27) is constructed as a 3/2-way valve and in unactuated setting produces a connection between internal space (82) and the space behind the stretching aid (15) by way of bores (88-92 or 93, 98, 99) and a switching-over of the mould air valve (27) interrupts this connection and conducts the mould air by way of a bore (93) into the internal space (82).

## Revendications

1. Moule de formage pour l'emboutissage profond de récipients (6) à partir d'une bande de film (7) de matière synthétique thermoplastique chauffée, se constituant d'une partie supérieure (1) et d'une partie inférieure (2), la partie inférieure (2) portant les noyaux de moule (5) et la partie supérieure (1), un abaisseur (14) par moule et un étireur (15) disposé à l'intérieur, coulissant par un tuyau (16), l'alimentation en air de formage s'effectuant par ce tuyau (16),
**caractérisé par**
une vanne (27) commutable, disposée à l'emplacement la liaison tuyau (16) - étireur (15) pour piloter l'alimentation en air de mise en forme de l'intérieur du tuyau (16) vers les ouvertures de sortie (39) dans l'étireur (15).

2. Moule de formage selon la revendication 1,
**caractérisé par**
une barre (23) disposée dans le tuyau (16) et coulissante dans le sens axial par rapport à celui-ci ou un tuyau (44, 54) disposé dans le tuyau (16) celui-ci et coulissant dans le sens axial par rapport à celui-ci, dont le déplacement entraîne une alimentation ou un blocage par la vanne (27) de l'air de mise en forme.

3. Moule de formage selon la revendication 2, dans lequel une barre (23) coulissante est disposée dans le tuyau (16),
**caractérisé en ce que**
l'alimentation en air de mise en forme s'effectue par un perçage longitudinal (28) dans la plaque de maintien (17) pour les tuyaux (16) dans l'espace intermédiaire (30) entre tuyau (16) et barre (23), l'extrémité de la barre (23) agissant conjointement avec un perçage axial (34) dans la console (31) de l'étireur (15) forme la vanne (27).

4. Moule de formage selon la revendication 2, dans lequel une barre (23) coulissante est disposée dans le tuyau (16),
**caractérisé en ce que**
l'alimentation en air de mise en forme s'effectue par un perçage longitudinal (28) dans la plaque de maintien (17) pour les tuyaux (16) dans l'espace intermédiaire (30) entre tuyau (16) et barre (23), l'extrémité de la barre (23) présentant un perçage axial (36) dans lequel débouche au moins une traversée (37), cette traversée (37) étant disposée de manière telle que par le coulissement de la barre (23) une libération ou un blocage de l'air de mise en forme s'effectue de l'espace intermédiaire (30) par le perçage axial (36) vers les ouvertures de sortie (23).

5. Moule de formage selon la revendication 4,
**caractérisé en ce que**
l'extrémité inférieure du perçage axial (36) dans la barre (23) est étanchéisée en position fermée par un joint (38) dans le pré-tendeur (32).

6. Moule de formage selon la revendication 4,
**caractérisé en ce que**
la traversée (37) est disposée de manière telle qu'elle figure en position fermée à l'intérieur du perçage axial (34) et est en communication avec l'espace intermédiaire (30) en position ouverte.

7. Moule de formage selon la revendication 2, dans lequel un tuyau coulissant (44) est disposé dans le tuyau (16),
**caractérisé en ce que**
l'alimentation en air de mise en forme s'effectue au travers d'un perçage longitudinal (42) dans la plaque de maintien (24) à l'intérieur du tuyau (44) et l'extrémité inférieure du tuyau (44), agissant conjointement avec un joint (45) dans le pré-tendeur (32) de l'étireur (15), forme la vanne (27).

8. Moule de formage selon la revendication 2, dans lequel un tuyau coulissant (44) est disposé dans le tuyau (16),
**caractérisé en ce que**
l'alimentation en air de mise en forme s'effectue au travers d'un perçage longitudinal (42) dans la plaque de maintien (24) à l'intérieur du tuyau (44) et l'extrémité inférieure du tuyau (44) est conduite dans un perçage (46) dans le pré-tendeur (32) et présente des percées (47) qui, en position ouverte de la vanne (27), figurent en recouvrement avec les ouvertures d'évacuation (39) dans l'étireur (15) et reposent dans le perçage (46) en position fermée.

9. Moule de formage selon la revendication 2, dans lequel un tuyau coulissant (44) est disposé dans le tuyau (16),
**caractérisé en ce que**
l'alimentation en air de mise en forme s'effectue au travers d'un perçage longitudinal (42) dans la plaque de maintien (24) à l'intérieur du tuyau (44) et l'extrémité inférieure du tuyau (44) est fermée par un cône (49) qui agit conjointement avec une arête d'étanchéité (51) dans la console (31) et présente des percées (50) dans le cloisonnement qui débouchent dans un espace libre (53) et qui par coulissement du cône (49), sont mises en communication avec l'ouverture d'évacuation (39).

10. Moule de formage selon la revendication 2, dans lequel un tuyau (16) est disposé à la distance (A) d'un tuyau (54) pouvant coulisser dans le sens axial,
**caractérisé en ce que**
l'air de mise en forme est conduit vers la vanne (27) au travers du tuyau (54) et est évacué par l'espace entre les deux tuyaux (16, 54) ou le contraire.

11. Moule de formage selon la revendication 10,
**caractérisé en ce que**
la vanne (27) est formée par un piston distributeur (55) disposé à l'extrémité inférieure du tuyau (54) présentant une assiette (56) qui ouvre ou étanchéise des percées (61) dans la console (31) s'étendant dans la zone de l'écartement (A), ainsi qu'un cône d'étanchéité (57) pour ouvrir ou fermer un perçage central (60) qui conduit à une ouverture d'évacuation (39) dans le pré-tendeur (32).

12. Moule de formage selon la revendication 10,
**caractérisé en ce que**
la vanne (27) est formée par une assiette (62) disposée à l'extrémité inférieure du tuyau (54) qui ouvre ou étanchéise des percées (63) dans la console (31) s'étendant dans la zone de l'écartement (A) et se forme par un perçage (64) dans le pré-tendeur (32) dans lequel siège l'extrémité inférieure du tuyau (54), des percées (65) étant disposées de manière telle dans la paroi du tuyau (54) que, par le mouvement axial du tuyau (54), elles sont déplacées d'une position fermée par le perçage (64) à une position recouvrant l'ouverture d'évacuation (39).

13. Moule de formage selon la revendication 1,
**caractérisé en ce que**
la vanne d'air de mise en forme (27) est constituée de façon à pouvoir être actionnée par la pression.

14. Moule de formage selon la revendication 1,
**caractérisé en ce que**
la vanne d'air de mise en forme (27) se constitue d'un piston de verrouillage (76) maintenu par un ressort (78) de façon à pouvoir céder, appuyé contre le perçage (79) pour apporter l'air de mise en forme et qui, lors de l'alimentation en air de mise en forme, est déplacé en contrariant la force de ressort.

15. Moule de formage selon la revendication 14,
**caractérisé en ce que**
le diamètre (D2) du piston de verrouillage (76) est plus grand que le diamètre (D1) du perçage (79) pour apporter l'air de mise en forme dans la console (31) de l'étireur (15).

16. Moule de formage selon la revendication 14,
**caractérisé en ce que**
les surfaces d'appui entre piston de verrouillage (76) et console (31) ont une forme de cône (74, 77).

17. Moule de formage selon l'une quelconque des revendications 14 à 16,
**caractérisé en ce que**
la force du ressort (78) et le diamètre (D1) du perçage (79) pour l'alimentation de l'air de mise en forme et le diamètre (D2) du piston de verrouillage (76) sont adaptés de manière telle les uns aux autres que la vanne d'air de mise en forme (27) s'ouvre pour une pression de mise en forme de 6 bar dans le perçage axial (24) du tuyau (16) et se referme pour une pression résiduelle comprise entre 2 et 5 bar dans le moule.

18. Moule de formage selon l'une quelconque des revendications 14 à 17,
**caractérisé en ce que**
la vanne d'air de mise en forme (27) est formée par une enveloppe (83) à l'intérieur de laquelle sont disposés le ressort (78) et le piston de verrouillage (76).

19. Moule de formage selon la revendication 18,
**caractérisé en ce que**
l'enveloppe (83) est fixée à la console (31) formant l'étireur (15).

20. Moule de formage selon la revendication 18,
**caractérisé en ce que**
l'enveloppe (83) est fixée dans le pré-tendeur (32) formant l'étireur (15).

21. Moule de formage selon la revendication 2 ou 13,
**caractérisé en ce que**
la vanne d'air de mise en forme (27) est configurée en tant que vanne de répartition 3/2 et établit, en position non actionnée, une communication entre l'espace intérieur (82) et l'espace derrière l'étireur (15) par les perçages (89, 92 ou 93, 98, 99) et une commutation de la vanne d'air de mise en forme (27) interrompt cette communication et conduit l'air de mise en forme dans l'espace intérieur (82) au travers d'un perçage (93).
